(19) Europäisches Patentamt / European Patent Office / Office européen des brevets

(11) **EP 3 139 469 B1**

(12) **FASCICULE DE BREVET EUROPEEN**

(45) Date de publication et mention
de la délivrance du brevet:
**24.02.2021 Bulletin 2021/08**

(51) Int Cl.:
*H02K 1/24* *(2006.01)*      *H02K 19/22* *(2006.01)*
*H02K 19/10* *(2006.01)*

(21) Numéro de dépôt: **16182053.5**

(22) Date de dépôt: **29.07.2016**

(54) **MACHINE ELECTRIQUE TOURNANTE MUNI D'UN ROTOR COMPRENANT DES POLES EN FORME DE GRIFFE**

ELEKTRISCH UMLAUFENDE MASCHINE, DIE MIT EINEM ROTOR AUSGESTATTET IST, DER KLAUENARTIGE POLE UMFASST

ROTATING ELECTRICAL MACHINE PROVIDED WITH A ROTOR COMPRISING CLAW-SHAPED POLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.09.2015 FR 1558105**

(43) Date de publication de la demande:
**08.03.2017 Bulletin 2017/10**

(73) Titulaire: **VALEO EQUIPEMENTS ELECTRIQUES MOTEUR**
**94046 Créteil Cedex (FR)**

(72) Inventeur: **ASLAN, Bassel**
**41124 MODENA (IT)**

(74) Mandataire: **Duprez, Richard et al**
**Valeo Equipements Électriques Moteur**
**2, rue André Boulle**
**94046 Creteil Cedex (FR)**

(56) Documents cités:
**EP-A1- 0 784 368        JP-A- 2009 201 298**
**US-A1- 2008 038 122     US-A1- 2014 175 939**

**Description**

**DOMAINE TECHNIQUE DE L'INVENTION**

La présente invention porte sur un rotor pour une machine électrique tournante comprenant des pôles nord et sud formés alternativement dans un sens de rotation du rotor.

L'invention trouve une application particulièrement avantageuse dans le domaine des alternateurs, des alterno-démarreurs de véhicule automobile.

**ARRIERE PLAN TECHNOLOGIQUE**

De façon connue en soi, une machine électrique tournante comporte un stator muni de bobinages entourant un rotor solidaire d'un arbre. Le rotor et le stator sont espacés entre eux par un entrefer. Le rotor pourra être solidaire d'un arbre menant et/ou mené et pourra appartenir à une machine électrique tournante sous la forme d'un alternateur comme décrit dans le document EP0803962 ou d'un moteur électrique comme cela est décrit dans le document EP0831580.

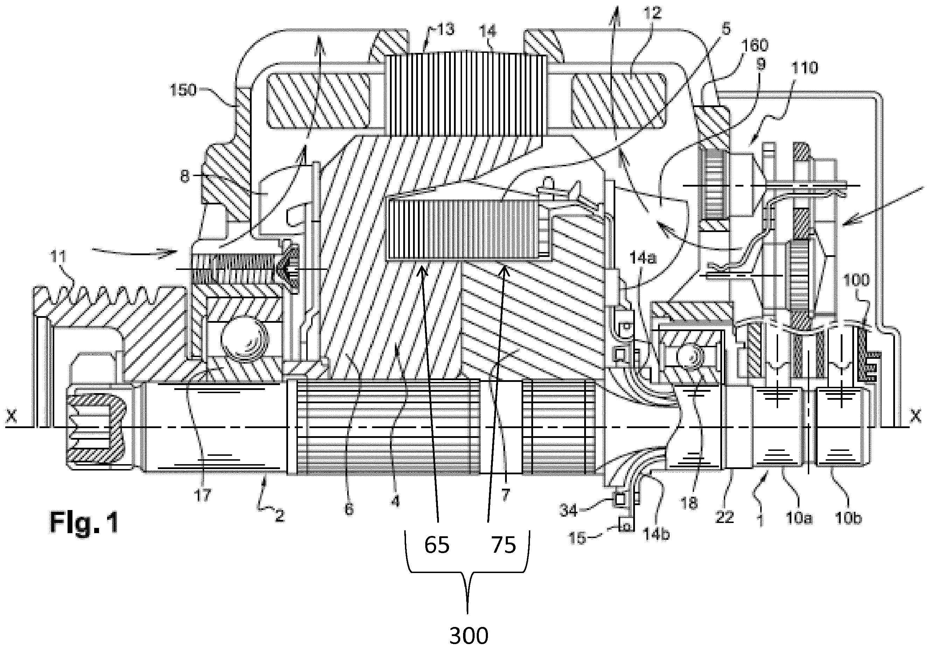

La figure 1, qui est une demi-vue en coupe, représente une machine électrique tournante polyphasée sous la forme d'un alternateur du type triphasé à ventilation interne pour véhicule automobile à moteur à combustion interne du type de celui décrit dans le document EP-A-0 515 259 auquel on se reportera.

L'alternateur comporte, en allant de gauche à droite de la figure 1, c'est-à-dire d'avant en arrière, une poulie d'entraînement 11 solidaire de l'extrémité avant d'un arbre 2, dont l'extrémité arrière porte des bagues collectrices 10a, 10b appartenant à un collecteur 1. L'axe X-X de l'arbre 2 constitue l'axe de rotation de la machine et du collecteur.

Centralement l'arbre 2 porte à fixation le rotor 4 doté d'un bobinage d'excitation 5 enroulée autour d'une portion cylindrique 300, dont les extrémités sont reliées par des liaisons filaires au collecteur 1 comme visible également à la figure 11 des documents FR 2 710 197, FR 2 710 199 et FR 2 710 200. Le rotor 4 est ici un rotor à griffes et comporte donc deux roues polaires 6, 7 portant chacune respectivement un ventilateur avant 8 et arrière 9 dotés chacun de pales comme dans le document EP-A- 0 515 259. Telle qu'illustré sur la figure 1, la portion cylindrique 300 est par exemple formée de deux demi noyaux 65 et 75 appartenant respectivement à la roue polaire 6 et 7.

Chaque roue polaire présente un plateau et des dents axiales ou griffes dirigées vers l'autre roue avec imbrication des dents d'une roue à l'autre pour formation de pôles magnétiques.

En d'autres termes, ledit rotor 4 comprend :

- une bobine de rotor 5 permettant de générer un flux magnétique au passage d'un courant électrique; et
- une paire roues polaires 6, 7 composées de :

    - une portion cylindrique 300 sur laquelle ladite bobine de rotor 5 est enroulée;
    - des plateaux s'étendant radialement vers l'extérieur depuis des première et seconde portions d'extrémité de ladite portion cylindrique 300; et
    - une pluralité de pôles magnétiques en forme de griffe s'étendant axialement depuis lesdits plateaux de façon à recouvrir ladite bobine de rotor 5, lesdits pôles magnétiques en forme de griffe étant aimantés avec lesdits pôles nord et sud N, S.

Les pôles magnétique sont activés lorsque le bobinage 5 est traversé d'un courant grâce aux bagues collectrices du collecteur 1 chacune en contact avec un balai (non référencé) porté par un porte-balais 100 solidaire dans ce mode de réalisation d'un un régulateur de tension non visible. Les balais sont d'orientation radiale par rapport à l'axe X-X, tandis que les bagues 10a, 10b sont d'orientation axiale par rapport à l'axe X-X.

Le rotor présentant un pas polaire angulaire Thêta égal à $2\pi$ divisé par 2P, P étant le nombre de paires de pôles du rotor et chaque pôle étant réalisé par exemple par une griffe.

Le régulateur est relié à un dispositif de redressement de courant alternatif en courant continu 110, tel qu'un pont de diodes (dont deux sont visibles à la figure 1) ou en variante des transistors du type MOSFET, notamment lorsque l'alternateur est du type réversible et consiste en un alterno-démarreur comme décrit par exemple dans le document WO 01/69762. Ce dispositif 110 est lui-même relié électriquement, d'une part, aux sorties des phases appartenant aux bobinages 12, que comporte le stator 13 de l'alternateur, et d'autre part, au réseau de bord et à la batterie du véhicule automobile. Ce stator 13, formant induit dans le cas d'un alternateur, entoure le rotor 4 et comprend un corps 14 doté intérieurement d'encoches axiales (non visibles) et des bobinages 12. Les encoches axiales sont munies des fils ou des épingles des bobinages 12. Ces bobinages 12 ont des chignons (non référencés) s'étendant, d'une part, en saillie axiale de part et d'autre du corps14 ; et, d'autre part, radialement au-dessus des ventilateurs 8, 9.

Pour mémoire on rappellera que le régulateur de tension a pour fonction de contrôler le courant circulant dans le bobinage d'excitation 5 pour réguler la tension délivrée au réseau de bord et à la batterie du véhicule via le dispositif redresseur de courant 110.

Les ventilateurs 8, 9 s'étendent au voisinage respectivement d'un flasque avant, appelé palier avant 150, et d'un flasque arrière, appelé palier arrière 160 appartenant au carter fixe de la machine électrique relié à la masse. Les paliers 150, 160 sont ajourés pour une ventilation interne de l'alternateur par l'intermédiaire des ventilateurs 8, 9 lorsque l'ensemble ventilateurs 8, 9- rotor 4 -arbre 2 est entraîné en rotation par la poulie 11 reliée au moteur du véhicule automobile par un dispositif de transmission comportant au moins une courroie en prise avec la poulie 1. Cette ventilation permet de refroidir les bobinages 12, 5 ainsi que le porte-balais 100 avec son régulateur et le dispositif de redressement 110. On a représenté par des flèches à la figure 1 le trajet suivi par le fluide de refroidissement, ici de l'air, à travers les différentes ouvertures des paliers 150, 160 et à l'intérieur de la machine.

Ce dispositif 110, le porte-balais 100, ainsi qu'un capot de protection ajouré (non référencé) sont portés ici par le palier arrière 160 en sorte que le ventilateur arrière 9 est plus puissant que le ventilateur avant 8. De manière connue, les paliers 150, 160 sont reliés entre eux, ici à l'aide de vis ou de tirants non visibles, pour former un carter destiné à être monté sur une partie fixe du véhicule.

Les paliers 150, 160 portent chacun centralement un roulement à billes 17, 18 pour supporter à rotation les extrémités avant et arrière de l'arbre 2 traversant les paliers 150, 160 pour porter la poulie 11 et les bagues 10a, 10b du collecteur 1.

Ces paliers ont une forme creuse et présentent ici chacun une partie d'orientation transversale ajourée portant le roulement 17, 18 et une partie d'orientation axiale ajourée et intérieurement étagée en diamètre pour centrer et retenir axialement le stator 13 lorsque les deux paliers sont reliés ensemble pour former le carter.

Les pales des ventilateurs 8, 9 s'étendent radialement au-dessus des logements que présentent les paliers 150, 160 pour montage des roulements 17 et 18; qui ainsi sont ventilés.

Lors de la rotation du rotor, la variation du flux magnétique permet la génération d'une tension alternative dans chaque phase d'un bobinage, dans le cas d'un bobinage multiphasé. Les tensions alternatives ainsi générées sont couplées et redressées pour obtenir une tension continue de charge de la batterie.

Cela étant, pour chacune des phases, la tension alternative présente plusieurs composantes fréquentielles. Parmi ces composantes on compte notamment la fondamentale et l'harmonique 3 dont la fréquence est trois supérieure à celle de la fondamentale.

Il est connu de dimensionner la machine afin de maximiser l'amplitude de la fondamentale pour chaque phase afin d'obtenir un meilleur rendement, l'harmonique 3 est perçue comme une perturbation qui baisse le rendement

US2014175939 A1 divulgue un alternateur connu comprenant un rotor muni d'une pluralité de pôles magnétiques en forme de griffe.

Il existe donc un besoin pour des machines optimisées qui permettent d'exploiter l'harmonique 3 et de faire en sorte que l'harmonique 3 participe à la charge de la batterie.

## OBJET DE L'INVENTION

L'invention a ainsi pour objet une machine électrique tournante, par exemple un alternateur, comprenant un rotor et un stator muni d'encoches destinées à recevoir un bobinage,

ledit rotor comprenant des pôles nord (N) et sud (S) formés alternativement dans un sens de rotation du rotor, ledit rotor présentant un pas polaire angulaire Thêta égal à $2\pi$ divisé par 2P, P étant le nombre de paires de pôles du rotor; et ledit rotor comprenant :

- une bobine de rotor permettant de générer un flux magnétique au passage d'un courant électrique; et
- une paire de roues polaires composées de :

  - une portion cylindrique sur laquelle ladite bobine de rotor est enroulée;
  - des plateaux s'étendant radialement vers l'extérieur depuis des première et seconde portions d'extrémité de ladite portion cylindrique; et
  - une pluralité de pôles magnétiques en forme de griffe s'étendant axialement depuis lesdits plateaux de façon à recouvrir ladite bobine de rotor, lesdits pôles magnétiques en forme de griffe étant aimantés avec lesdits pôles nord et sud (N, S),

ledit stator entourant ledit rotor et un entrefer est défini comme étant la distance minimale entre le stator et le rotor.

Selon une caractéristique générale de l'invention, chaque pôle magnétique en forme de griffe comprend une première surface externe qui fait face auxdites encoches, et ladite première surface externe présente une ouverture angulaire dans un plan de coupe d'un des pôles en forme de griffe, ladite l'ouverture angulaire maximale Obe pour l'ensemble des plans de coupe d'un des pôles en forme de griffe est égale à Obe = K x Thêta, avec K compris entre 0,4 et 0,8.

Le plan de coupe est défini comme étant perpendiculaire à l'axe de la machine, ladite ouverture angulaire étant définie comme l'angle maximal entre deux droites passant chacune par ledit axe de la machine et par un point de la surface externe centrale, lesdites deux droites étant contenues dans ledit plan de coupe.

On obtient ainsi une optimisation de la force électromotrice et notamment de son pic pour chaque phase. Ainsi, la force électro motrice d'une phase résultante de l'harmonique 1 et de l'harmonique 3 présente un pic supérieur à ce qu'on obtiendrait conventionnellement.

Selon d'autres caractéristiques prises individuellement ou en combinaison :

- la distance radiale entre l'ensemble des points de ladite première surface externe et le stator est inférieure à trois fois l'entrefer. On maximise ainsi la valeur du pic de la force électro motrice.

- l'ouverture angulaire de la surface externe centrale est constante pour l'ensemble des plans de coupe du pôle en forme de griffe.

- l'ouverture angulaire de la surface externe diminue pour les plans de coupe qui se rapprochent de l'extrémité du pôle en forme de griffe.

- la première surface externe dite centrale est située dans une zone centrale du pôle en forme de griffe. La première externe surface externe est située dans une zone centrale dans le sens où dans un plan de coupe perpendiculaire à l'axe de la machine tel que défini précédemment les deux distances entre un point de la première surface externe et les deux extrémités droite et gauche de la griffe définies quand on regarde la griffe depuis le stator et que l'extrémité de la griffe est située vers le haut ne sont pas différente de plus de 30%. Par exemple, on peut définir cela en termes mathématiques, si l'on définit dans un plan de coupe, d1 la distance entre un point de la première surface externe et l'extrémité gauche de la griffe et d2 la distance entre le point de la première surface externe et l'extrémité droite de la griffe, on obtient : $(d1-d2)/(d1+d2)/2) < 30\%$. La griffe présente ainsi formée permet d'obtenir une harmonique 3 en phase avec la fondamentale.

- la première surface externe est bordée sur sa périphérie d'au moins une surface externe périphérique, la surface externe périphérique présentant une discontinuité avec la surface externe dite centrale. Ce type de forme permet de maximiser l'harmonique 3 de la force électro motrice.

- la première surface externe est bordée respectivement sur ses deux périphéries de deux surfaces externes périphériques, les deux surfaces externes périphériques présentant chacune une discontinuité avec ladite première surface externe dite centrale. Ce type de forme permet de maximiser l'harmonique 3 de la force électro motrice et permet également que la première surface externe soit située dans une zone grossièrement centrale de la griffe.

- la première surface externe périphérique est formée d'une surface plane. Ainsi on obtient une distance encoche du stator surface externe du rotor qui est constante ce qui permet de favoriser une valeur constante de la force électromotrice ainsi obtenue.

- la surface externe périphérique est formée d'une surface plane.

- la surface externe périphérique est formée par un chanfrein.

- la surface externe périphérique présente un angle avec la première surface externe supérieur à 30°. Cela permet d'accentuer encore la discontinuité afin d'obtenir une force électromotrice nulle sur les deux surfaces externes périphériques. En d'autres termes, les plupart des points de la surface externe périphérique sont à une distance radiale supérieure à trois fois l'entrefer. Plus l'angle est accentué plus les points de la surface externe périphérique s'éloignent rapidement au fur et à mesure que l'on progresse circonférentiellement sur le pole en forme de griffe. Ce qui permet de part l'éloignement des points de la surface périphérique par rapport aux encoches du stator d'assurer une force électromotrice nulle pour cette surface périphérique.

- le bobinage du stator présente 5 phases. Il s'agit d'une des machines pour lesquelles l'harmonique 3 n'est pas homopolaire, c'est-à-dire est variable d'une phase à l'autre.

- le bobinage du stator présente 7 phases. Il s'agit d'une des machines pour lesquelles l'harmonique 3 n'est pas homopolaire, c'est-à-dire est variable d'une phase à l'autre Il s'agit d'une des machines pour lesquelles l'harmonique 5 n'est pas homopolaire, c'est-à-dire est variable d'une phase à l'autre..

- le bobinage du stator présente un nombre de phases Nphi, Nphi étant supérieur strictement à 5 et étant impair et non divisible par 3. Il s'agit d'une des machines pour lesquelles l'harmonique 3 n'est pas homopolaire, c'est-à-dire est variable d'une phase à l'autre.

- le bobinage du stator est couplé en étoile. Un tel couplage permet une résultante entre les différentes harmoniques d'ordre 3 résultante des différentes phases favorable.

## BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.

La figure 1, déjà décrite, est une vue schématique en coupe transversale d'une machine électrique comprenant un rotor et un redresseur selon l'état de la technique;

la figure 2 est une vue d'un rotor selon l'invention,

les figures 3 et 4 sont respectivement deux courbes du flux magnétique et de la force électromotrice,

les figures 5a et 5b sont des représentations schématiques des forces électromagnétiques, et

la figure 6 est une courbe de la valeur maximale de la différence entre deux forces électromagnétiques.

Les éléments identiques, similaires, ou analogues conservent la même référence d'une figure à l'autre.

## DESCRIPTION D'EXEMPLES DE REALISATION DE L'INVENTION

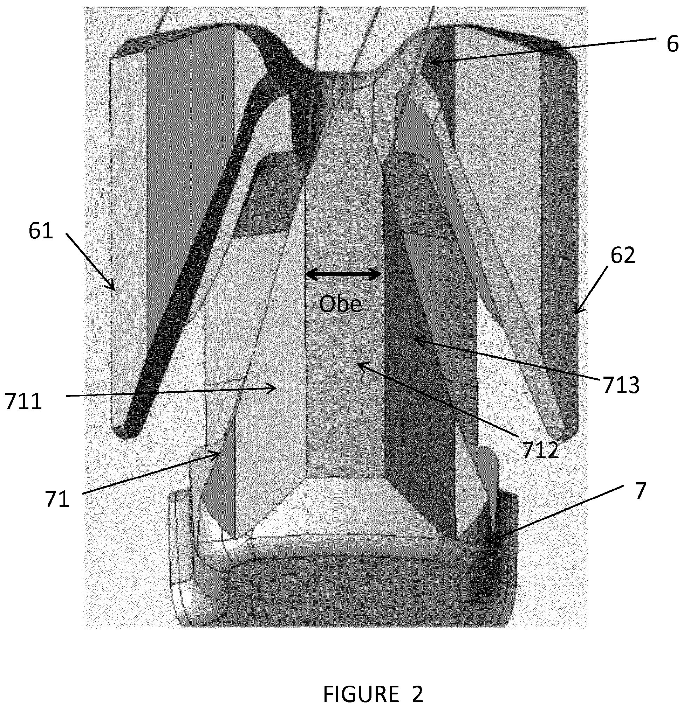

La figure 2 illustre un rotor d'une machine électrique tournante selon l'invention. Le rotor de la figure 2 est différent de celui de la machine électrique tournante de la figure 1, les références aux éléments identiques étant reprises entre les figures 1 et 2. Il est illustré sur la figure 2, deux griffes 61 et 62 de la roue polaire 6 et une griffe 71 de la roue polaire 7. La griffe 71 présente trois surfaces externes 711, 712 et 713. Ces trois surfaces externes correspondent chacune à une surface extérieure du rotor vue du stator. Pour les distinguer la surface externe 712 est nommé surface externe centrale, tandis que les deux zones 711 et 713 sont nommées périphériques.

Par exemple, la surface externe centrale 712 présentant une surface plane de direction ortho radiale de sorte que le flux transmis du rotor vers le stator augmente de manière constante sur cette surface externe centrale 712. Par ailleurs, la distance radiale entre la surface externe et les encoches du stator est minimisée pour maximiser le flux transmis du rotor vers le stator. En d'autres termes, la surface extérieure correspondant à la surface externe centrale 712 fait face aux encoches du stator et la distance radiale entre l'ensemble des points de cette surface extérieure et le stator est inférieur à trois fois l'entrefer.

La surface externe 712 s'étend axialement sur la surface externe de la griffe 71 de la zone de liaison entre la griffe et le plateau de la roue polaire jusqu'à l'extrémité de la griffe.

On définit un plan de coupe de la griffe 71 qui est perpendiculaire à l'axe de la machine. La surface externe 712 présente une ouverture angulaire dans ce plan de coupe qui est définie comme l'angle maximal entre deux droites passant par ledit axe de la machine et par un point de la surface externe 712 contenues dans ledit plan de coupe.

Comme on peut le comprendre l'ouverture angulaire varie lorsque l'on déplace axialement le plan de coupe sur la griffe 71. On définit l'ouverture Obe comme l'ouverture angulaire maximale de la surface externe 712 lorsque l'on déplace le plan de coupe axialement. Cette ouverture Obe peut s'exprimer en fonction du pas polaire angulaire Thêta. On a alors Obe = K x Thêta.

En d'autres termes, la surface externe 712 présentant une ouverture angulaire maximale Obe et le flux transmis de la surface externe 712 vers les encoches du stator varie de manière constante.

Cette surface externe centrale 712 est bordée sur ses deux extrémités circonférentielles par les deux surfaces externes périphériques 711 et 713. Par exemple, ces surfaces externes sont réalisées par deux chanfreins. Par exemple, elles présentent une surface plane ayant un angle de plus de 30° avec la surface externe centrale 712.

Selon un mode de réalisation non illustrée la surface externe centrale 712 pourrait être bordée par une surface externe périphérique sur une seule de ses extrémités, par exemple à droite avec la surface externe périphérique 713.

La griffe 71 comprend une surface intérieure non illustré située du côté intérieur et faisant face à la bobine.

En d'autres termes, une surface externe périphérique ou les deux surfaces externes périphériques 711 et 713 relient la surface externe centrale à la surface intérieure. Par exemple, l'ouverture angulaire de ladite surface intérieure est supérieure à l'ouverture angulaire de la surface externe centrale 712.

En tout état de cause, les surfaces externes périphériques 711 et 713 doivent présenter une discontinuité avec la surface externe 712. Ainsi, on limite fortement la contribution des surfaces externes périphériques 711 et 713 au flux transmis par la griffe 71.

On peut donc considérer que le flux transmis par la griffe 71 augmente constamment sur la surface externe centrale 712 d'ouverture angulaire maximale Obe et reste constant sur les surfaces externes périphériques 711 et 713. En d'autres termes, quand le rotor tourne, le flux d'une phase augmente de façon constante lorsque la surface 712 passe en face de cette phase alors que ce flux reste constant quand les surfaces 711 et 713 passent.

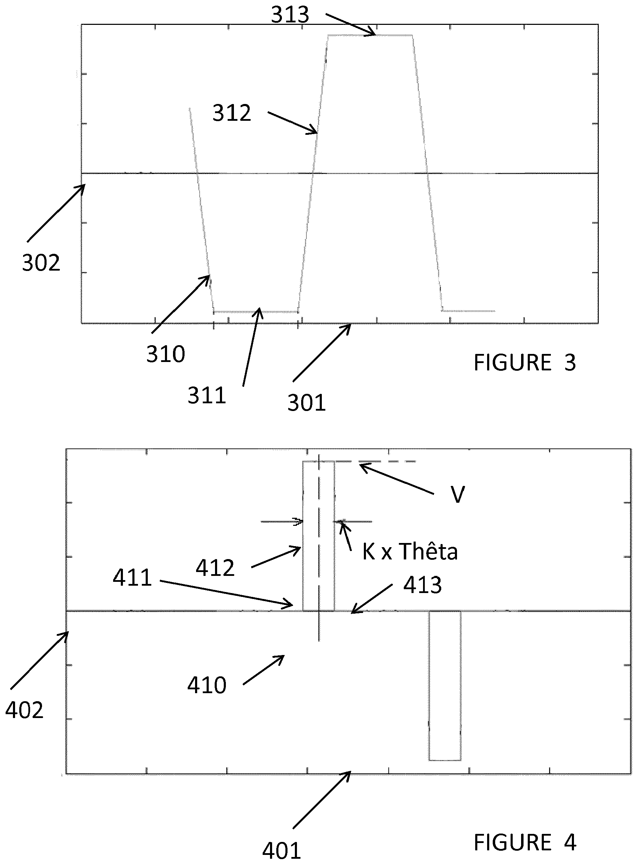

La figure 3 illustre une courbe 310 du flux transmis par un rotor présentant une griffe telle que décrite dans la figure 2. Cette courbe est représentée dans un repère orthonormé comprend en abscisse un axe 301 et en ordonné un axe 302. L'axe 301 est exprimé en unité angulaire, par exemple en degré. L'axe 301 exprime l'angle de rotation du rotor. L'axe 302 est exprimé en Weber. La courbe 310 permet ainsi d'exprimer en Weber la valeur du flux transmis par le rotor en fonction de sa position angulaire exprimé en degré.

La courbe 310 présente principalement trois zones 311, 312 et 313. La zone 312 d'augmentation constante du flux correspond à la surface externe 712 mentionnée à la figure 2, tandis que les zones 311 et 313 correspondent aux surfaces externes 711 et 713 mentionnées à la figure 2.

Selon la figure 3, on observe que le flux transmis par la surface externe 712 présentant une ouverture angulaire maximale Obe correspond à la zone 312 de la courbe 310 et que le flux transmis de la surface externe 712 vers les encoches du stator varie de manière constante et rapide. On observe également que le flux transmis par les surfaces externes 711 et 713 correspondants respectivement aux zones 311 et 313 de la courbe 310 reste constant.

La figure 4 illustre une courbe 410 de la force électromotrice également appelé FEM selon un acronyme anglo-saxon bien connu de l'homme du métier. La courbe illustre la force électromotrice générée pour une phase du bobinage pour rotor présentant une griffe telle que décrite dans la figure 2. Cette courbe 410 est représentée dans un repère orthonormé comprend en abscisse un axe 401 et en ordonné un axe 402. L'axe 401 est exprimé en unité angulaire, par exemple en degré. L'axe 401 exprime l'angle de rotation du rotor. L'axe 402 est exprimé en Volt. La courbe 410 permet ainsi d'exprimer en volt la force électromotrice pour une phase en fonction de la position angulaire du rotor exprimé en degré.

La courbe 410 présente principalement trois zones 411, 412 et 413. La zone 412 de valeur maximale de la force électromotrice correspond à la surface externe 712 mentionnée à la figure 2, tandis que les zones 411 et 413 de force électromotrice nulle correspondent aux surfaces externes 711 et 713 mentionnées à la figure 2.

Selon la figure 4, on observe que la zone 412 présentent l'ouverture angulaire Obe c'est la largeur angulaire K* Thêta exprimée en fonction du pas polaire Thêta. Par ailleurs, on défini le maximum de la zone 412 par la valeur V.

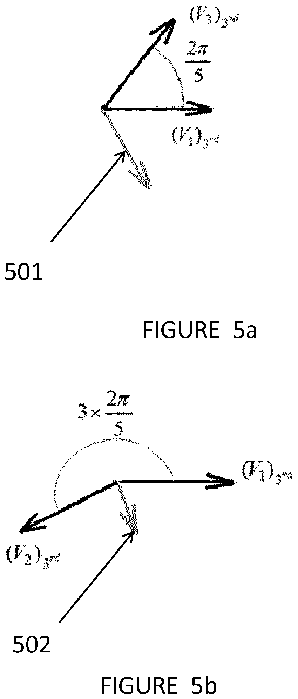

Sur les figures 5a et 5b, on illustre deux types de connexion de bobinage et leur conséquence sur la force électromotrice d'ordre 3 résultante.

La figure 5a illustre pour une connexion étoile 5 phases, la force électromotrice d'ordre 3 résultante 501 obtenue à partir de la force électromotrice de la phase 3 d'ordre 3 moins la force électromotrice de la phase 3 d'ordre 3. C'est-à-dire sous forme d'équation :

$$(V_1)_{3^{rd}} - (V_3)_{3^{rd}} = \left|(V_1)_{3^{rd}}\right| \times 1{,}176$$

La figure 5b illustre pour une connexion pentagone 5 phases, la force électromotrice d'ordre 3 résultante 502 obtenue à partir de la force électromotrice de la phase 1 d'ordre 3 additionnée à la force électromotrice de la phase 2 d'ordre 3. C'est-à-dire sous forme d'équation :

$$(V_1)_{3^{rd}} + (V_2)_{3^{rd}} = \left|(V_1)_{3^{rd}}\right| \times 0{,}62$$

Il apparaît donc que pour maximaliser la force électromotrice d'ordre 3 résultante en fonction du module de la force électromotrice de la phase d'ordre 3, un couplage étoile 5 phases est plus favorable qu'un couple pentagone 5 phases.

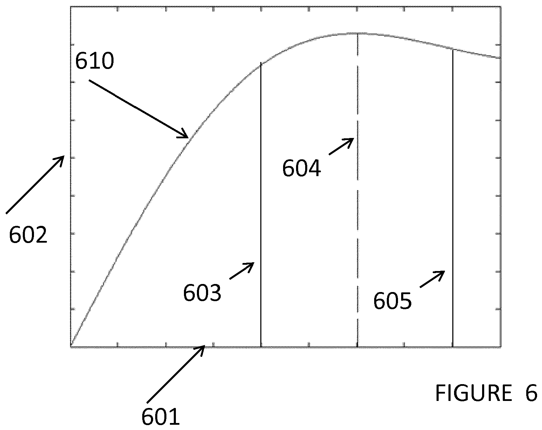

La figure 6 illustre une courbe 610 qui correspond à la valeur maximale en fonction du K de la différence de force électromotrice entre deux phases non successives pour un système 5 phases, c'est-à-dire que la courbe 610 correspond à la force électromotrice obtenue au niveau du redresseur pour un couplage étoile 5 phases. On peut l'exprimer sous forme d'une formule :

$$\left( (V_1) - (V_3) \right)_{\max}$$

Cette courbe 610 est représentée dans un repère orthonormé comprend en abscisse un axe 601 et en ordonné un axe 602. L'axe 601 est sans unité. L'axe 601 correspond à la valeur de K mentionné précédemment. L'axe 602 est exprimé en Volt. La courbe 610 permet ainsi d'exprimer en volt 610 la force électromotrice résultante en fonction de la valeur de K.

Il apparait que la valeur maximale de la force électromotrice résultante est obtenue pour K égale à une valeur 604, alors qu'un plancher est obtenu pour les valeurs de K comprise entre 603 et 605.

En termes mathématiques, la courbe 610 peut s'exprimer à l'aide de la formule ci-dessous :

$$\left( V_1 - V_3 \right)_{\max} \propto 1.902 \cdot \sin(K \cdot \frac{\pi}{2}) + \frac{1.176}{3} \sin(3 \frac{K \cdot \pi}{2}) ,$$

en fonction de K.

Cette formule étant obtenu à l'aide de

$((V)_1{}^{st})_{\max}$ correspondant à la valeur maximale de FEM d'une phase pour la première harmonique

$((V)_3{}^{rd})_{\max}$ correspondant à la valeur maximale de FEM d'une phase pour la troisième harmonique

$$\left( (V)_{1^{st}} \right)_{\max} = V \frac{4}{\pi} \cdot \sin(K \cdot \frac{\pi}{2})$$

$$\left( (V)_{3^{rd}} \right)_{\max} = V \frac{4}{3 \cdot \pi} \cdot \sin(3 \cdot K \cdot \frac{\pi}{2})$$

On obtient alors la formule

$$(V_1 - V_3)_{\max} = \max_t \left[ \begin{array}{l} \left( (V)_{1^{st}} \right)_{\max} \cdot \cos(\omega \cdot t) + \left( (V)_{3^{rd}} \right)_{\max} \cdot \cos(3 \cdot \omega \cdot t) \\ - \left( (V)_{1^{st}} \right)_{\max} \cdot \cos(\omega \cdot t - \frac{4\pi}{5}) - \left( (V)_{3^{rd}} \right)_{\max} \cdot \cos(3 \cdot \omega \cdot t - \frac{12\pi}{5}) \end{array} \right]$$

qui est obtenue en considérant les sommets de l'harmonique 1 qui coïncident avec les sommets de l'harmonique 3.

**Revendications**

1. Machine électrique tournante, par exemple un alternateur, comprenant un rotor (4) et un stator muni d'un bobinage et d'encoches recevant le bobinage, le bobinage présentant un nombre de phases Nphi, Nphi étant supérieur ou égal à 5 et étant impair et non divisible par 3,
ledit rotor comprenant des pôles nord (N) et sud (S) formés alternativement dans un sens de rotation du rotor, ledit rotor présentant un pas polaire angulaire (Thêta) égal à 2π divisé par 2P, P étant le nombre de paires de pôles du rotor; et ledit rotor (4) comprenant :

   - une bobine de rotor (5) permettant de générer un flux magnétique au passage d'un courant électrique; et
   - une paire de roues polaires (6, 7) composées de :

      - une portion cylindrique (300) sur laquelle ladite bobine de rotor (5) est enroulée;
      - des plateaux s'étendant radialement vers l'extérieur depuis des première et seconde portions d'extrémité de ladite portion cylindrique (300); et
      - une pluralité de pôles magnétiques en forme de griffe (61, 62, 71) s'étendant axialement depuis lesdits plateaux de façon à recouvrir ladite bobine de rotor (5), lesdits pôles magnétiques en forme de griffe (61, 62, 71) étant aimantés avec lesdits pôles nord et sud (N, S),

   ledit stator entourant ledit rotor (4) et un entrefer étant défini comme étant la distance minimale entre le stator et le rotor dans lequel

chaque pôle magnétique en forme de griffe (61, 62, 71) comprend une première surface externe (712) qui fait face auxdites encoches,

ladite première surface externe (712) présente une ouverture angulaire dans un plan de coupe d'un des pôles en forme de griffe, ladite l'ouverture angulaire maximale (Obe) pour l'ensemble des plans de coupe d'un des pôles en forme de griffe est égale à Obe = K x Thêta, avec K compris entre 0,4 et 0,8, le plan de coupe étant défini comme étant perpendiculaire à l'axe de la machine, ladite ouverture angulaire étant définie comme l'angle maximal entre deux droites passant chacune par ledit axe de la machine et par un point de la surface externe centrale, lesdites deux droites étant contenues dans ledit plan de coupe.

2. Machine électrique tournante selon la revendication 1, **caractérisée en ce que** l'ouverture angulaire de la surface externe centrale (712) est constante pour l'ensemble des plans de coupe du pôle en forme de griffe.

3. Machine électrique tournante selon la revendication 1 ou 2, **caractérisée en ce que** l'ouverture angulaire de la surface externe (712) diminue pour les plans de coupe qui se rapprochent de l'extrémité du pôle en forme de griffe.

4. Machine électrique tournante selon l'une quelconques des revendications 1 à 3, **caractérisée en ce que** la première surface externe (712) est située dans une zone centrale du pôle en forme de griffe.

5. Machine électrique tournante selon l'une quelconque des revendications 1 à 4, **caractérisée en ce que** la première surface externe (712) est bordée sur sa périphérie d'au moins une surface externe périphérique, la surface externe périphérique (711, 713) présentant une discontinuité avec ladite première surface externe dite centrale (712).

6. Machine électrique tournante selon l'une quelconques des revendications 1 à 4, **caractérisée en ce que** la première surface externe (712) est bordée respectivement sur ses deux périphéries de deux surfaces externes périphériques, les deux surfaces externes périphériques (711, 713) présentant chacune une discontinuité avec ladite première surface externe dite centrale (712).

7. Machine électrique tournante selon l'une quelconques des revendications 1 à 6, **caractérisée en ce que** la première surface externe (712) est formée d'une surface plane.

8. Machine électrique tournante selon la revendication 7, **caractérisée en ce que** la surface externe périphérique est formée d'une surface plane.

9. Machine électrique tournante selon la revendication 7, **caractérisée en ce que** la surface externe périphérique est formée par un chanfrein.

10. Machine électrique tournante selon la revendication 8 ou 9, **caractérisée en ce que** la surface externe périphérique présente un angle avec la première surface externe (712) supérieur à 30°.

11. Machine électrique tournante selon l'une quelconques des revendications 1 à 10, **caractérisée en ce que** le bobinage du stator présente 5 phases.

12. Machine électrique tournante selon l'une quelconques des revendications 1 à 10, **caractérisée en ce que** le bobinage du stator présente 7 phases.

13. Machine électrique tournante selon l'une quelconques des revendications précédentes, **caractérisée en ce que** le bobinage du stator est couplé en étoile.

**Patentansprüche**

1. drehende elektrische Maschine, beispielsweise ein Wechselstromgenerator, umfassend einen Rotor (4) und einen Stator, der mit einer Wicklung und Nuten, die die Wicklung aufnehmen, versehen ist, wobei die Wicklung eine Anzahl von Phasen Nphi aufweist, wobei Nphi größer oder gleich 5 und ungerade und nicht durch 3 teilbar ist, wobei der Rotor Nord- (N) und Südpole (S) umfasst, die abwechselnd in einer Drehrichtung des Rotors ausgebildet sind, wobei der Rotor eine Winkelpolteilung (Theta) gleich 2n geteilt durch 2P aufweist, wobei P die Anzahl von Polpaaren des Rotors ist; und der Rotor (4) Folgendes umfasst:

- eine Rotorspule (5), die es gestattet, bei Durchfluss eines elektrischen Stroms einen Magnetfluss zu erzeugen; und
- ein Paar Polräder (6, 7), die aus Folgendem gebildet sind:
- einem zylindrischen Abschnitt (300), auf den die Rotorspule (5) gewickelt ist;
- Platten, die sich von einem ersten und zweiten Endabschnitt des zylindrischen Abschnitts (300) radial nach außen erstrecken; und
- einer Mehrzahl von klauenförmigen Magnetpolen (61, 62, 71), die sich von den Platten axial erstrecken, so dass sie die Rotorspule (5) bedecken, wobei die klauenförmigen Magnetpole (61, 62, 71) mit den Nord- und Südpolen (N, S) magnetisiert sind, wobei der Stator den Rotor (4) umgibt und ein Luftspalt als der Mindestabstand zwischen dem Stator und dem Rotor definiert ist, wobei jeder klauenförmige Magnetpol (61, 62, 71) eine erste Außenfläche (712) umfasst, die den Nuten gegenüberliegt, die erste Außenfläche (712) einen Öffnungswinkel in einer Schnittebene eines der klauenförmigen Pole aufweist, wobei der maximale Öffnungswinkel (Obe) für alle Schnittebenen eines der klauenförmigen Pole gleich Obe = K x Theta ist, wobei K zwischen 0,4 und 0,8 liegt, wobei die Schnittebene als senkrecht zur Achse der Maschine verlaufend definiert ist, wobei der Öffnungswinkel als der maximale Winkel zwischen zwei Geraden definiert ist, die jeweils die Achse der Maschine und einen Punkt der mittleren Außenfläche durchlaufen, wobei die zwei Geraden in der Schnittebene liegen.

2. Drehende elektrische Maschine nach Anspruch 1, **dadurch gekennzeichnet, dass** der Öffnungswinkel der mittleren Außenfläche (712) für alle Schnittebenen des klauenförmigen Pols konstant ist.

3. Drehende elektrische Maschine nach Anspruch 1 oder 2, **dadurch gekennzeichnet, dass** der Öffnungswinkel der Außenfläche (712) für die Schnittebenen abnimmt, die sich dem Ende des klauenförmigen Pols annähern.

4. Drehende elektrische Maschine nach einem der Ansprüche 1 bis 3, **dadurch gekennzeichnet, dass** die erste Außenfläche (712) in einem mittleren Bereich des klauenförmigen Pols liegt.

5. Drehende elektrische Maschine nach einem der Ansprüche 1 bis 4, **dadurch gekennzeichnet, dass** die erste Außenfläche (712) an ihrer Peripherie von mindestens einer peripheren Außenfläche gesäumt ist, wobei die periphere Außenfläche (711, 713) eine Diskontinuität zur ersten, mittleren Außenfläche (712) aufweist.

6. Drehende elektrische Maschine nach einem der Ansprüche 1 bis 4, **dadurch gekennzeichnet, dass** die erste Außenfläche (712) jeweils an ihren zwei Peripherien von zwei peripheren Außenflächen gesäumt ist, wobei die zwei peripheren Außenflächen (711, 713) jeweils eine Diskontinuität zur ersten, mittleren Außenfläche (712) aufweisen.

7. Drehende elektrische Maschine nach einem der Ansprüche 1 bis 6, **dadurch gekennzeichnet, dass** die erste Außenfläche (712) von einer ebenen Fläche gebildet ist.

8. Drehende elektrische Maschine nach Anspruch 7, **dadurch gekennzeichnet, dass** die periphere Außenfläche von einer ebenen Fläche gebildet ist.

9. Drehende elektrische Maschine nach Anspruch 7, **dadurch gekennzeichnet, dass** die periphere Außenfläche von einer Schräge gebildet ist.

10. Drehende elektrische Maschine nach Anspruch 8 oder 9, **dadurch gekennzeichnet, dass** die periphere Außenfläche einen Winkel zur ersten Außenfläche (712) aufweist, der größer als 30° ist.

11. Drehende elektrische Maschine nach einem der Ansprüche 1 bis 10, **dadurch gekennzeichnet, dass** die Wicklung des Stators 5 Phasen aufweist.

12. Drehende elektrische Maschine nach einem der Ansprüche 1 bis 10, **dadurch gekennzeichnet, dass** die Wicklung des Stators 7 Phasen aufweist.

13. Drehende elektrische Maschine nach einem der vorhergehenden Ansprüche, **dadurch gekennzeichnet, dass** die Wicklung des Stators sternförmig geschaltet ist.

**Claims**

1. Rotating electrical machine, for example an alternator, comprising a rotor (4) and a stator provided with a winding and notches receiving the winding, the winding having a number of phases Nphi, Nphi being greater than or equal to 5 and being odd and not divisible by 3,
said rotor comprising north (N) and south (S) poles formed alternately in a direction of rotation of the rotor, said rotor having an angular pole pitch (theta) equal to 2n divided by 2P, P being the number of pairs of poles of the rotor; and said rotor (4) comprising:

   - a rotor coil (5) allowing a magnetic flux to be generated upon the passage of an electrical current; and
   - a pair of pole wheels (6, 7) composed of:
   - a cylindrical portion (300) on which said rotor coil (5) is wound;
   - plates extending radially outwards from the first and second end portions of said cylindrical portion (300); and
   - a plurality of claw-shaped magnetic poles (61, 62, 71) extending axially from said plates so as to cover said rotor coil (5), said claw-shaped magnetic poles (61, 62, 71) being magnetized with said north and south poles (N, S),

   said stator surrounding said rotor (4) and an air gap being defined as being the minimum distance between the stator and the rotor in which each claw-shaped magnetic pole (61, 62, 71) comprises a first outer surface (712) which faces said notches,
   said first outer surface (712) has an angular aperture in a cutting plane of one of the claw-shaped poles, said maximum angular aperture (Obe) for all of the cutting planes of one of the claw-shaped poles is equal to Obe = K x theta, with K lying between 0.4 and 0.8, the cutting plane being defined as being at right angles to the axis of the machine, said angular aperture being defined as the maximum angle between two straight lines each passing through said axis of the machine and through a point of the central outer surface, said two straight lines being contained in said cutting plane.

2. Rotating electrical machine according to Claim 1, **characterized in that** the angular aperture of the central outer surface (712) is constant for all of the cutting planes of the claw-shaped pole.

3. Rotating electrical machine according to Claim 1 or 2, **characterized in that** the angular aperture of the outer surface (712) decreases for the cutting planes which approach the end of the claw-shaped pole.

4. Rotating electrical machine according to any one of Claims 1 to 3, **characterized in that** the first outer surface (712) is situated in a central zone of the claw-shaped pole.

5. Rotating electrical machine according to any one of Claims 1 to 4, **characterized in that** the first outer surface (712) is bordered on its periphery by at least one peripheral outer surface, the peripheral outer surface (711, 713) having a discontinuity with said first so-called central outer surface (712).

6. Rotating electrical machine according to any one of Claims 1 to 4, **characterized in that** the first outer surface (712) is bordered respectively on its two peripheries by two peripheral outer surfaces, the two peripheral outer surfaces (711, 713) each having a discontinuity with said first so-called central outer surface (712).

7. Rotating electrical machine according to any one of Claims 1 to 6, **characterized in that** the first outer surface (712) is formed by a flat surface.

8. Rotating electrical machine according to Claim 7, **characterized in that** the peripheral outer surface is formed by a flat surface.

9. Rotating electrical machine according to Claim 7, **characterized in that** the peripheral outer surface is formed by a chamfer.

10. Rotating electrical machine according to Claim 8 or 9, **characterized in that** the peripheral outer surface has an angle with the first outer surface (712) greater than 30°.

11. Rotating electrical machine according to any one of Claims 1 to 10, **characterized in that** the winding of the stator has 5 phases.

12. Rotating electrical machine according to any one of Claims 1 to 10, **characterized in that** the winding of the stator has 7 phases.

13. Rotating electrical machine according to any one of the preceding claims, **characterized in that** the winding of the stator is star-coupled.

Fig.1

FIGURE 2

FIGURE 3

FIGURE 4

$(V_3)_{3^{rd}}$

$\dfrac{2\pi}{5}$

$(V_1)_{3^{rd}}$

501

FIGURE 5a

$3 \times \dfrac{2\pi}{5}$

$(V_1)_{3^{rd}}$

$(V_2)_{3^{rd}}$

502

FIGURE 5b

FIGURE 6

**RÉFÉRENCES CITÉES DANS LA DESCRIPTION**

**Documents brevets cités dans la description**

- EP 0803962 A
- EP 0831580 A
- EP 0515259 A
- FR 2710197
- FR 2710199
- FR 2710200
- WO 0169762 A
- US 2014175939 A1